# EUROPÄISCHE PATENTSCHRIFT

(11) **EP 1 234 864 B1**
(45) Veröffentlichungstag und Bekanntmachung des Hinweises auf die Patenterteilung: **31.07.2013**
(21) Anmeldenummer: 02002603.5
(22) Anmeldetag: 05.02.2002
(51) Int. Cl.: C09J 133/06, C09J 7/02, C09J 153/00, C08F 293/00

(54) **Haftklebemasse mit geringem Ausgasungsverhalten**
Low-fogging pressure sensitive adhesives
Masse auto-adhésive à faible embuage

(30) Priorität: 24.02.2001 DE 10109067
(43) Veröffentlichungstag der Anmeldung: 28.08.2002
(73) Patentinhaber: TESA SE, 20253 Hamburg (DE)
(72) Erfinder: Husemann, Marc, Dr., 22559 Hamburg (DE); Zöllner, Stephan, Dr., 21244 Buchholz/Nordheide (DE)

(56) Entgegenhaltungen:
- EP-A- 0 621 326
- EP-A- 0 660 187
- EP-A- 0 937 761
- EP-A- 1 008 640
- EP-A- 1 101 808
- EP-A- 1 127 934
- WO-A-01/44400
- WO-A-98/01478
- WO-A-99/31144
- US-A- 5 403 658
- US-A- 5 681 654
- US-A- 5 763 548
- AVERY DENNISON CORP.: "STN RAPRA (SPECIALITY TAPES )" STN RAPRA (ADHESIVES AGE 34, NO 8, JULI 1991, SEITE 6 ), XP002102890

## Beschreibung

Die Erfindung betrifft ein Verfahren zur Herstellung einer Haftklebemasse auf Basis von (Co-) Polymeren der Acrylsäure und/oder Methylacrylsäure und/oder deren Derivaten.

Heißschmelzverfahren (Hotmeltverfahren) mit lösungsmittelfreier Beschichtungstechnik sind von anwachsender Bedeutung für die industrielle Herstellung von Haftklebemassen. Umweltauflagen und steigende Kosten der klassischen Lösemittelverfahren beschleunigen diese Entwicklung. Neben SIS-Systemen (Styrol/Isopren/Styrol-Copolymere) werden zunehmend auch Polymere auf Acrylatbasis aus der Schmelze als Schicht auf Trägermaterialien aufgetragen.

Für spezielle Anwendungen, insbesondere im Bereich der Elektronik, werden Haftklebebänder mit einem sehr geringen Ausgasungsverhalten benötigt. Die hierfür eingesetzten Haftklebemassen lassen sich nur über das Hotmeltverfahren herstellen, da über die konventionellen Methoden aus der Lösung beschichtete Haftklebebänder immer noch deutliche Anteile an Restlösemittel enthalten.
Für diese Anwendungsbereiche werden temperaturstabile, scherfeste und sehr ausgasungsarme Acrylathaftklebebänder benötigt. Lösungsmittel- sowie Monomerreste können während der Applikation, besonders bei erhöhter Temperatur, ausdampfen und somit zu einer lösemittelhaltigen Atmosphäre führen. Hierdurch können verschiedene Probleme verursacht werden. Zum einen besitzen einige Monomere eine gute elektrische Leitfähigkeit, so daß die Gefahr von Kurzschlüssen steigt. Zum anderen können durch die Lösemittel bzw. Monomere Plastikteile sowie Isolatoren zerstört werden. Daher versucht man, sehr hochreine Acrylathaftklebebänder einzusetzen, welche eine äußerst geringe Tendenz zur Ausgasung besitzen.

Vorschläge für ausgasungsarme Haftklebemassen beziehungsweise zu deren Herstellung werden in einer Reihe von Schriften gemacht. So beschreibt die US 5,681,654 eine ausgasungsarme Haftklebemasse auf Kautschukbasis. Diese Haftklebemasse wurde jedoch speziell für die Anwendungen im Automobilbau entwickelt, wo größere Ausgasungsmengen toleriert werden. Weiterhin weisen die verwendeten Kautschukklebemassen gegenüber Polyacrylaten einige spezifische Nachteile auf, zum Beispiel eine geringere Wärmescherfestigkeit und eine Tendenz zur Alterung über die Oxidation der enthaltenen Doppelbindungen. Da im Elektronikbereich aber häufig Ozon entsteht, sind Kautschukklebemassen für einen Einsatz in diesem Anwendungsgebiet nicht geeignet.

In der US 5,761,184 sind vibrations-dämpfende Materialien beschrieben, die ebenfalls eine sehr geringe Tendenz zur Ausgasung besitzen. Eine Grenze der tolerierbaren Ausgasung wird in dieser Schrift nicht angegeben. EP 1003640 und US 5763548 offenbaren Polymere/Haftklebemasse hergestellt durch lebende ATRP-Polymerisation.

EP0621326 offenbart Selbstklebemasse auf Acrylat-Basis erhältlich durch Aufkonzentrieren einer Lösung einer solchen Masse in einem Entgasungs-Extruder, EP0660187 und EP1127934 offenbaren Haftklebemasse auf Basis von Copolymeren der Acrylsäure/Methylacrylsäure.

Die DE 198 07 752 A1 führt ein foggingfreies Klebeband ein, wobei als Fogging die Kondensation von verdampften flüchtigen Bestandteilen aus der Kraftfahrzeug-Innenausstattung an den Glasscheiben bezeichnet wird. Dieses Selbstklebeband umfaßt einen foggingfreien Träger, auf dem zumindest einseitig eine foggingfreie, druckempfindliche Klebemasse aufgetragen ist. Als Klebemasse wird dabei bevorzugt eine solche auf Acrylat-Hotmelt-Basis eingesetzt. Für den Restlösemittelgehalt wird eine bevorzugte Grenze von maximal 1 Gew.-% angegeben.

Um eine hinreichende Scherfestigkeit der Polyacrylatmassen, welche für eine Verwendung beispielsweise für Klebebänder unerläßlich ist, zu erzielen, findet üblicherweise nach der Heißschmelzverarbeitung oder nach dem Auftrag auf ein Trägermaterial eine Vernetzung der Haftklebemasse statt. Zur Zeit sind Vernetzungsverfahren durch Bestrahlung mit ultraviolettem Licht (UV) oder mit Elektronenstrahlen (ESH) die am häufigsten angewendeten Prozesse. Thermische Vernetzungsverfahren mit Metallchelaten oder multifunktionellen Isocyanaten, welche bei Lösungsmittelsystemen bevorzugt eingesetzt werden, lassen sich nicht oder nur sehr begrenzt auf die Heißschmelztechnologie anwenden.

Zur Herstellung von Acrylathaftklebebändern, welche ein geringes Ausgasungsverhalten besitzen sollen, ist die UV-Vernetzung vorzuziehen. Je energiereicher die verwendete Strahlung ist, desto mehr kommt es bei der Bestrahlung zur Fragmentierung der Polymerketten oder der eingesetzten Monomere, diese Fragmente führen wieder zu einer Erhöhung des Ausgasungswertes und zur Einschränkung der Anwendbarkeit des erzeugten Produktes.

Neben dem Nachteil der Fragmentierung bei der Bestrahlungsvernetzung von Acrylathaftklebemassen gibt es bei dieser Vernetzungsart weitere Einschränkungen. So kann es beispielsweise zu nicht vollständiger Vernetzung kommen, insbesondere für Haftklebebänder, die mit einem Masseauftrag auf einen Träger von mehr als 100 g/m² vorliegen. Bei der UV-Bestrahlung kann es weiterhin zur Fragmentierung des hierbei benötigten Fotoinitiators kommen, was wiederum zu den oben bereits geschilderten Problemen führt, da auch hierbei leichtflüchtige Bestandteile freigesetzt werden.

Zur Einstellung der erforderlichen kleb- und hafttechnischen Eigenschaften werden Klebe- oder Haftklebemassen in der Regel Harze hinzugemischt. Dieser Begriff umfaßt nach DIN 55947 "feste, harte bis weiche, organische, nichtkristalline Produkte mit mehr oder weniger breiter Molekulargewichtsverteilung [...] Harze sind in der Regel nur Rohstoffe [...]".
Harze beinhalten naturgemäß ebenfalls leichtflüchtige Komponenten, so daß die Zumischung bei der Herstellung von Acrylathaftklebemassen ebenfalls dann nachteilig ist, wenn diese Haftklebemassen einen sehr geringen Ausgasungswert aufweisen sollen.

Für Haftklebebänder, für deren Verwendung ein sehr geringes Ausgasungsverhalten erforderlich ist, beispielsweise für die Anwendung in der Elektronikindustrie, sind daher bevorzugt Haftklebemassen einzusetzen, die weder thermisch noch durch energiereiche Strahlung vernetzt werden. Gleichzeitig sollte der Einsatz von Harzen vermieden werden.

Aufgabe der Erfindung ist es, ein Verfahren zur Herstellung von Haftklebemassen mit einem sehr geringen Ausgasungsverfahren, insbesondere für die Verwendung im Elektronikbereich, anzubieten, bei deren Herstellung die oben geschilderten Nachteile und Probleme des Standes der Technik vermieden werden.

Überraschenderweise wurde gefunden, daß das Ausgasungsverhalten von Haftklebemassen erheblich herabgesetzt werden kann, wenn man diese derart herstellt, daß sie zur Ausbildung mehrphasiger Domänen in der Lage sind.

Entsprechend betrifft die Erfindung ein Verfahren zur Herstellung einer Haftklebemasse auf Basis von (Co-)Polymeren der Acrylsäure und/oder Methacrylsäure und/oder deren Derivaten, welche eine zumindest zweiphasige Domänenstruktur sowie einen Ausgasungswert von weniger als 10 µg/g aufweist, bezogen auf das Gewicht der Haftklebemasse, wenn man die Haftklebemasse nach dem im experimentellen Teil als tesa-Methode bezeichneten Verfahren vermißt. Bei dem erfindungsgemäßen Verfahren wird eine mittels des Rapid-Addition-Fragmentaion-Transfer- (RAFT-) Verfahrens erhältliche Polyacrylatlösung eingesetzt und gemäß der Merkmale des Hauptanspruchs aufkonzentriert.

Bei einer ersten besonders bevorzugten Ausführungsform des erfinderischen Verfahrens zur Herstellung der Haftklebemasse sind die (Co-)Polymere mindestens teilweise Blockcopolymere des allgemeinen Typs P(A)-P(B)-P(A), wobei
- P(A) einen Homo- oder Copolymerblock aus den Monomeren A repräsentiert, welcher eine Glasübergangstemperatur von -80 °C bis 0 °C besitzt,
- P(B) einen Homo- oder Copolymerblock aus den Monomeren B repräsentiert, welcher eine Glasübergangstemperatur von 20 °C bis 175 °C besitzt,
- und die Homo- oder Copolymerblöcke P(A) und die Homo- oder Copolymerblöcke P(B) ineinander unlöslich sind.

Bei einer zweiten sehr bevorzugten Ausführungsform sind die Blöcke auf die jeweils anderen Monomere zurückzuführen, so daß die (Co-)Polymere mindestens teilweise Blockcopolymere des allgemeinen Typs P(B)-P(A)-P(B) sind, wobei
- P(A) einen Homo- oder Copolymerblock aus den Monomeren A repräsentiert, welcher eine Glasübergangstemperatur von -80 °C bis 0 °C besitzt,
- P(B) einen Homo- oder Copolymerblock aus den Monomeren B repräsentiert, welcher eine Glasübergangstemperatur von 20 °C bis 175 °C besitzt,
- und die Homo- oder Copolymerblöcke P(A) und die Homo- oder Copolymerblöcke P(B) ineinander unlöslich sind.

Die Blockcopolymere können dabei vollständig als P(A)-P(B)-P(A)-Blöcke beziehungsweise vollständig als P(B)-P(A)-P(B)-Blöcke eingesetzt werden. Es sind jedoch auch Mischungen dieser Dreiblockcopolymere und/oder mit Zweiblockcopolymeren P(A)-P(B) und/oder mit den Monoblöcken P(A) und/oder P(B) einsetzbar, wobei durch die Wahl der jeweiligen Zusammensetzung die klebtechnischen Eigenschaften der Copolymere wunsch- und einsatzgemäß beeinflußt werden können.

Bevorzugt sind die Monomere A dabei gewählt aus der Gruppe der Acrylsäureester CH₂=CHCOOR und/oder Methacrylsäureester CH₂=C(CH₃)COOR, wobei die Gruppen R Alkylreste mit 4 bis 14 Kohlenstoffatomen, bevorzugt solche mit 4 bis 9 Kohlenstoffatomen darstellen.

Diese Charakterisierung umfaßt sowohl Blöcke P(A), welche ausschließlich aus identischen Molekülen A (mit jeweils der gleichen Anzahl an Kohlenstoffatomen) bestehen, als auch Blöcke, welche auf unterschiedliche Monomere A basieren, wobei die Reste R 4 bis 14 Kohlenstoffatome beinhalten.

Spezifische Beispiele für im erfinderischen Sinne hervorragend einsetzbare Verbindungen aus der vorstehend genannten Gruppe sind n-Butylacrylat, n-Pentylacrylat, n-Hexylacrylat, n-Heptylacrylat, n-Octylacrylat, n-Nonylacrylat und deren verzweigte Isomere, wie beispielsweise 2-Ethylhexylacrylat.

Weiterhin ist es im erfinderischen Sinne sehr günstig, wenn zumindest ein Teil der Monomere A eine funktionelle Gruppe R' aufweist, welche zur koordinativen Vernetzung befähigt ist.

Außerdem hat es sich als sehr vorteilhaft herausgestellt, wenn zumindest ein Teil der Monomere A eine funktionelle Gruppe R" aufweist, welche für das Homo- oder Copolymer P(A) und/oder für das gesamte Blockcopolymer eine kohäsionssteigernde Wirkung besitzt.

Ausdrücklich erwähnt seien hier die Monomere A, deren Reste sowohl zur koordinativen Vernetzung befähigt sind als auch eine kohäsionssteigernde Wirkung für den Block P(A) darstellen, bei denen also R' = R" ist.

Besonders bevorzugte Beispiele für Verbindungen mit koordinativ vernetzenden und/oder kohäsionssteigernden Eigenschaften sind Hydroxyethylacrylat, Hydroxypropylacrylat, Hydroxyethylmethacrylat, Hydroxypropylmethacrylat, Acrylsäure, Methacrylsäure, Allylalkohol, Maleinsäureanhydrid, Itaconsäureanhydrid, Itaconsäure, Acrylamid und Glyceridylmethacrylat, wobei diese Aufzählung nicht abschließend ist.

Als Monomere A werden optional weiterhin bis zu 30 Gew.-% Vinylmonomere aus folgenden Gruppen eingesetzt: Vinylester, Vinylether, Vinylhalogenide, Vinylidenhalogenide, Vinylverbindungen mit aromatischen Cyclen und Heterocyclen in α-Stellung.

Auch hier seien nicht ausschließlich einige Beispiele genannt: Vinylacetat, Vinylformamid, Vinylpyridin, Ethylvinylether, Vinylchlorid, Vinylidenchlorid, Acrylonitril.

Als Komponente B werden bevorzugt Monomere gewählt, die in der Lage sind, eine 2-Phasen Domänenstruktur mit den Copolymer-Blöcken P(A) auszubilden.

Vorteilhafte Beispiele für Verbindungen, welche als Komponente B eingesetzt werden, sind Vinylaromaten, Methylmethacrylate, Cyclohexylmethacrylate, Isobornylmethacrylate. Besonders bevorzugte Beispiele für die Komponente B sind Methylmethacrylat und Styrol.

Ein weiteres bevorzugtes Charakteristikum dieser Blockcopolymere P(A)-P(B)-P(A) beziehungsweise P(B)-P(A)-P(B) ist, daß das Molekulargewicht zwischen 5.000 und 600.000 g/mol, mehr bevorzugt zwischen 20.000 und 300.000 g/mol liegt. Der Anteil der Polymerendblöcke liegt vorteilhaft zwischen 10 und 60 Gewichtsprozent des gesamten Blockcopolymers, mehr bevorzugt zwischen 15 und 40 Gewichtsprozent.

Zur Herstellung der erfindungsgemäßen Blockcopolymere wird der RAFT-Prozeß (rapid addition-fragmentation chain transfer) oder Varianten hiervon eingesetzt, die beispielsweise in der Wahl der Regler, der Initiatoren beziehungsweise deren Mengen und Häufigkeit der Zugabe variieren können. Zur Herstellung kann z.B. ein difunktioneller Initiator verwendet werden.

Bevorzugt können zur Polymerisation der Blockcopolymere Dithioester oder Trithiocarbonate zur Radikalkontrolle eingesetzt werden. Die Polymerisation kann in Gegenwart eines organischen Lösungsmittels oder in Gegenwart von Wasser oder in Gemischen aus organischen Lösungsmitteln und/oder Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h, wobei der Umsatz größer 97 % liegen sollte.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wäßrigen Medien bzw. Gemischen aus organischen und wäßrigen Lösungsmitteln werden zur Polymerisation bevorzugt Emulgatoren und Stabilisatoren zugesetzt.

Als sehr bevorzugte Variante wird der RAFT-Prozeß (reversible addition-fragmentation chain transfer) durchgeführt. Der Prozeß ist in den Patenten WO 98/01478 und WO 99/31144 ausführlich beschrieben. Zur Herstellung von Blockcopolymeren eignen sich besonders vorteilhaft Trithiocarbonate [Macromolecules 2000, 33, 243-245). In einer sehr vorteilhaften Variante wird das Trithiocarbonat (II) zur Polymerisation eingesetzt:

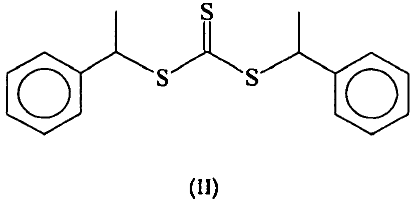

Nach der Polymerisation wird die Polymerisationslösung aufkonzentriert. Um einen entsprechend geringen Ausgasungswert der erfinderischen Acrylathaftklebmasse zu gewährleisten, wird die derart erhältliche Polyacrylatmasse vorteilhaft einer Nachreinigung unterzogen.

Bei dem erfindungsgemäßen Verfahren wird die Aufkonzentration wie folgt durchgeführt: Der Polyacrylatlösung wird nach erfolgter Polymerisation ein Schleppmittel zugesetzt und die mit dem Schleppmittel versetzte Polyacrylatlösung in einen Extruder geleitet, in welchem die Polyacrylatlösung einer Trägerdampfdestillation unterzogen wird. Durch die Aufkonzentration entsteht derart eine Polyacrylatmasse, welche aus der Schmelze weiterverarbeitet wird.

In einer sehr bevorzugten Vorgehensweise, welche insbesondere auf die Verwendung als Haftklebemasse für Klebebänder zielt, wird die aufkonzentrierte Polyacrylatmasse auf ein Trägermaterial aufgetragen.

Bei dem erfindungsgemäßen Verfahren wird das Lösemittel in einem Aufkonzentrationsextruder unter vermindertem Druck entfernt, wobei bevorzugt das Lösemittel in verschiedenen Vakuumstufen abdestilliert wird. Das Schleppmittel dient dabei dazu, Lösungsmittel, Verunreinigungen und leichtflüchtige Komponenten auszutragen.

In einer verbesserten Variante des erfinderischen Verfahrens wird im Anschluß an die Aufkonzentation in zumindest einem weiteren Schritt eine Nachreinigung durchgeführt, indem die aufkonzentrierte Polyacrylatmasse erneut mit demselben oder einem weiteren Schleppmittel versetzt wird und im Extruder eine weitere Trägerdampfdestillation durchgeführt wird, wobei bevorzugt jeweils höhere Temperaturen und niedrigere Vakuen gewählt werden als in dem vorhergehenden Destillationsschritt. Dabei wird nochmals von Lösemittel, Restmonomerresten und Verunreinigungen befreit.

Der Extruder im Aufkonzentrationsschritt ist bevorzugt ein gleich- oder gegenläufiger Doppelschneckenextruder. Die Aufkonzentration und die Nachreinigungsschritte können dabei in ein- und demselben Extruder oder in einander nachgeschalteten Extrudern durchgeführt werden. Werden mehrere Extruder eingesetzt, so ist es günstig, für die Nachreinigungsschritte ebenfalls Doppelschneckenextruder zu verwenden, wobei auch die gleich- oder gegenläufig gewählt werden können.

Durch die vorteilhaft gewählten Monomerzusammensetzungen ist die Beanspruchung der Polyacrylatmassen im Extruder gering. Werden beispielsweise Polymere mit Molekulargewichten von etwa 600.000 (M_{w} ≈ 600.000 g/mol) eingesetzt, so beträgt der Molekulargewichtsabbau im Extruder dabei nur bis zu 5 %.

In einer hervorragenden Vorgehensweise läßt sich als Schleppmittel für die Destillation in dem erfinderischen Verfahren Wasserdampf einsetzen. Geeignet sind aber auch organische, dem Fachmann für die Trägerdampfdestillation geläufige Schleppmittel.

Bei der Wasserdampfdestillation dient der Wasserdampf als Träger für die aus der Haftklebemasse zu entfernenden, mehr oder weniger flüchtigen Stoffe. Selbst viele hochsiedende mit Wasser nicht oder nur wenig mischbare Stoffe lassen sich auf diese Weise schon bei etwa 100 °C destillieren, wenn man sie zusammen mit Wasser erhitzt oder während der Destillation heißen Wasserdampf hindurchleitet.
Eine Variante, mit der die Wasserdampfdestillation zur Entfernung höhersiedender Komponenten betrieben werden kann, wird durch die Destillation mit überhitztem Wasserdampf (bei Temperaturen von etwa 130 °C) gegeben.

Aufgrund der Zusammensetzung der Haftklebemasse kann auf eine nachträgliche Vernetzung durch aktinische Strahlung verzichtet werden. Hierdurch wird die Entstehung von Fragmenten vermieden, so daß der niedrige Ausgasungswert nicht wieder erhöht wird.

Weiterhin kann die derart hergestellte Haftklebemasse beziehungsweise das Haftklebeband optional kurzzeitig erhitzt werden. Der Wärmeeintrag kann durch Bestrahlung, z. B. mit UV-, IR- oder Mikrowellenbestrahlung, erfolgen. Die Bestrahlungseinrichtungen sind vorteilhaft mit einer Absaugevorrichtung gekoppelt. Die Haftklebemasse wird bevorzugt durch IR-Bestrahlung im Wellenlängenbereich um 1700 cm⁻¹ erhitzt, wobei die Temperatur der Haftklebemasse zumindest 100 °C, bevorzugt 120 °C oder höher betragen, dabei aber einen oberen Grenzwert von 170 °C nicht überschreiten sollte.

Beansprucht wird weiterhin ein Klebeband, insbesondere für die Verwendung in der Elektronikindustrie, mit einer ein- oder beidseitig auf ein Trägermaterial aufgetragenen Schicht einer Haftklebemasse auf Basis von (Co-)Polymeren der Acrylsäure und/oder Methacrylsäure und/oder deren Derivaten, welche eine zumindest zweiphasige Domänenstruktur sowie einen Ausgasungswert von weniger als 10 µg/g unter den zuvor bereits angegebenen Bedingungen aufweist, sowie ein Haftklebeband mit einer Haftklebemasse, wie sie in den einzelnen Ausführungsformen beschrieben ist.

Eine sehr vorteilhafte Ausführungsform dieses erfinderischen Klebebandes besitzt ein Trägermaterial mit einer sehr geringen Tendenz zur Ausgasung, bevorzugt von weniger als 5 µg/g, idealerweise von weniger als 3 µg/g.

### Beispiele

### Testmethoden

Ein 13 mm breiter Streifen des Klebebandes wurde auf eine glatte und gereinigte Stahloberfläche aufgebracht. Die Auftragsfläche betrug 20 mm x 13 mm (Länge x Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70 °C wurde ein 1 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### Messung des Ausgasungswertes ("tesa-Methode";Test B):

### Vorbereitung der Muster:

Die Klebemassen wurden auf PET-Folie im Hotmeltverfahren beschichtet. Der Masseauftrag betrug ca. 50 g/m². Nach oder vor der UV-Bestrahlung wurde eine etwa 40 cm² große Probenfläche aus dem Lappenmuster ausgeschnitten, mit Glasperlen (Durchmesser: 60 - 80 µm) bestreut und zusammengerollt in ein 25 ml HeadspaceGläschen überführt. Die Probe wurde 1 h bei 100 °C bei Normaldruck ausgeheizt und abschließend die leichtflüchtigen Bestandteile aus dem Dampfraum in den GC injiziert.

### Analyse:

Die leicht-flüchtigen Bestandteile wurden über GC-MS ermittelt. Als Meßgeräte wurden verwendet:
GC: Hewlett Packard HP 5890 SERIES II
MS: Hewlett Packard HP 5989 A

Zur Messung wurde eine DB-5 Säule mit 60 m Länge, 0,25 mm Innendurchmesser und 1 µm Filmdicke eingebaut. Die Messung erfolgte mit einem Temperaturprogramm 50 °C (3 min.) - 150 C/min - 260 °C (2 min.). Als Trägergas wurde Wasserstoff (90 kPa) mit einem Strom von 1 ml/min benutzt. Das Splitverhältnis betrug 1:10.
Die Quantifizierung der Peaks im GC erfolgte gegen externe Standards.

### Herstellung des Trithiocarbonats:

Als Regler wurde folgendes Trithiocarbonat (II) gemäß Macromolecules 2000, 33, 243-245 und Synth. Commun. 1988, 18, 1531-1536 hergestellt. 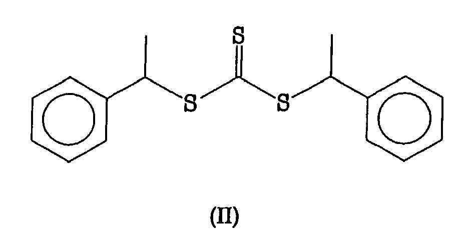 Das kommerziell erhältliche Vazo 67™ (DuPont) ist die chemische Verbindung 2,2'-Azobis(2-ethylpropionsäurenitril).

### Durchführung der Polymerisationen

### Trithiocarbonat-funktionalisiertes Polystyrol (A):

In einem 500 ml Schlenkgefäß wurden 400 ml Styrol und 3,47 g des Trithiocarbonates (II) (0.01172 mol) eingefüllt, das Gefäß dreimal entgast und dann unter Argon die Polymerisation durchgeführt. Zur Initiierung wurde auf 120 °C hochgeheizt und unter Rühren 30 h polymerisiert. Zur Isolierung wurde auf RT abgekühlt, das Polymer in 1000 ml Dichlormethan gelöst und dann in 7,5 L Methanol unter starkem Rühren gefällt. Der Niederschlag wurde über eine Fritte abfiltriert und dann über GPC analysiert. (Mₙ = 23500, M_{w/n} = 1,32).

### Beispiel 1

Ein für radikalische Polymerisationen konventioneller Reaktor wurde mit 32 g Trithiocarbonat-funktionalisiertem Polystyrol (A), 442 g 2-Ethylhexylacrylat, 4,5 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt für 16 h polymerisiert.
Zur Isolierung wurde auf RT abgekühlt, das Blockcopolymer PS-P(EHA/AS)-PS mit Aceton auf 50 % verdünnt und dann über ein konventionelles Rakel auf einen ausgasungsarmen (< 2 µg/g flüchtige Anteile nach Testmethode B) mit Saran geprimerten 23 µm dicken PET-Träger beschichtet und dann über 5 verschiedenen Stufen mit 60, 80, 100, 120 und 120 °C getrocknet. Die durchschnittliche Aufenthaltsdauer in jeder Temperaturzone betrug 80 Sekunden. Der Masseauftrag betrug 50 g/m².
Anschließend wurde nach Testmethode A und B ausgetestet.

### Beispiel 2

Ein für radikalische Polymerisationen konventioneller Reaktor wurde mit 3,2 kg Trithiocarbonat-funktionalisiertem Polystyrol (A), 44,2 kg n-Buthylacrylat, 4,5 kg Acrylsäure und 0,12 kg Vazo 67™ (Fa. DuPont) befüllt. Nach 20 Minuten Durchleiten von Argon und zweimaligen Entgasen wurde der Reaktor unter Rühren auf 70 °C hochgeheizt für 16 h polymerisiert.
Zur Isolierung wurde auf RT abgekühlt und das Blockcopolymer PS-P(BA/AS)-PS durch einen Einschneckenextruder (Bersdorff) mit drei Entgasungeinheiten aufkonzentriert. Die Vakuumstufen betrugen 200 mbar, 60 mbar und 9 mbar. Der Durchsatz an Speiselösung belief sich auf 40 kg/h, wobei die Eintrittslösung durch eine Feedvorwärmung 120 °C vorgewärmt wurde. Die Austrittstemperatur der Acrylatschmelzhaftklebemasse betrug etwa 130°C.
Anschließend wurde durch die Schmelzhaftklebemasse für 2 Minuten Wasserdampf geleitet, in einem gleichläufig betriebenen Doppelschneckenextruder (Welding Engineers) vom Wasser/Verunreinigungsgemisch gereinigt und dann die Klebemasse aus der Schmelze durch eine Breitschlitzdüse auf einen ausgasungsarmen (<2 µg/g flüchtige Anteile nach Testmethode B) mit Saran geprimerten 23 µm dicken PET-Träger beschichtet. Der Masseauftrag betrug 50 g/m².
Anschließend wurde nach Testmethode A und B ausgetestet.

### Beispiel 3:

Es wurde analog Beispiel 2 vorgegangen. Die Haftklebemasse wurde aus der Schmelze durch eine Breitschlitzdüse auf einen ausgasungsarmen (2 µg/g flüchtige Anteile nach Testmethode B) mit Saran geprimerten 23 µm dicken PET-Träger beschichtet. Der Masseauftrag betrug 50 g/m². Anschließend wurde über 3 verschiedenen Stufen mit 120, 130 und 130 °C getempert. Die durchschnittliche Aufenthaltsdauer in jeder Temperaturzone betrug 60 Sekunden.
Anschließend wurde nach Testmethode A und B ausgetestet.

### Vergleichsbeispiel V1:

UV-AC Resin 203™ (BASF AG) wurde mit einer Hotmelt-Beschichtungsapparatur auf einen ausgasungsarmen (<2 µg/g flüchtige Anteile nach Testmethode B) mit Saran geprimerten 23 µm dicken PET-Träger beschichtet. Der Masseauftrag betrug 50 g/m². Anschließend wurde nach Testmethode A und B ausgetestet.

### Vergleichsbeispiel V2:

UV-AC Resin 203™ (BASF AG) wurde mit einer Hotmelt-Beschichtungsapparatur auf einen ausgasungsarmen (<2 pg/g flüchtige Anteile nach Testmethode B) mit Saran geprimerten 23 µm dicken PET-Träger beschichtet und anschließend mit einer UV-Anlage (Eltosch; Quecksilbermitteldruck-Strahler, 120 W/cm², volle Leistung) zweimal mit 20 m/min bestrahlt. Der Masseauftrag betrug 50 g/m².
Anschließend wurde nach Testmethode A und B ausgetestet.

### Resultate

Die Ergebnisse der Ausgasungen zeigt Tabelle 1:

**Tabelle 1**

| Beispiel | Flüchtige Anteile [µg/g] |
|---|---|
| 1 | 8 |
| 2 | 7 |
| 3 | 9 |
| V1 | 150 |
| V2 | 240 |

Die Ergebnisse zeigen, daß die für geringes Ausgasungsverhalten ausgelobten UV-AC Resins™ noch sehr große Mengen an leichtflüchtigen Anteilen enthalten (V1). Verwendet man den UV AC-Resin 203™ zur Hotmelt-Beschichtung und vernetzt mit einem konventionellem UV-C Strahler, so besitzt das gesamte Haftklebeband noch flüchtige Bestandteile von etwa 240 µg/g Klebemasse (V2). Als flüchtige Bestandteile wurden folgende Verbindungen detektiert:
Aceton, 2-Methyl-pentan, 3-Methyl-pentan, Hexan, Ethylacetat, 2-Methyl-1-propanol, 1-Butanol, 2,4-Dimethyl-pentan, Cyclohexan, 3-Methyl-hexan, 1,2-Dimethylcyclopentan, Heptan, Methylcyclohexan, Toluol, 3-Methyl-heptan, Ethylbenzol, p-Xylol, 2-Propansäurebutylester, 1,3-Dimethylbenzol, Benzol, Ameisensäurebutylester, Butanal und Isobuten.
Dies gemessenen Mengen sind zu groß für empfindliche Anwendungen in der elektrischen und elektronischen Industrie. Dagegen zeigen die Acrylatblockcopolymere der Beispiele 1 bis 3 ein eindeutig besseres Ausgasungverhalten. Alle drei Haftklebemassen erfüllen die Norm von weniger als 10 µg/g flüchtige Bestandteile. Da durch die Domänenbildung der Polystyrolblöcke keine Vernetzung erforderlich ist (s. Tabelle 2), werden keine zusätzlichen flüchtigen Bestandteile entstehen, wie es üblicherweise durch die zur Vernetzung angewandte aktinische Bestrahlung der Fall ist. Somit sind Haftklebebänder mit einem besonders günstigen Ausgasungsverhalten zugänglich.
In Tabelle 2 ist die Scherfestigkeit der Beispiele aufgelistet:
In der folgenden Tabelle sind die klebtechnischen Eigenschaften dieser Massen aufgelistet.

**Tabelle 2**

| Beispiel | SSZ RT /A1 | SSZ 70 °C /A2 |
|---|---|---|
| 1 | +10000 | +10000 |
| 2 | +10000 | +10000 |
| 3 | +10000 | +10000 |
| V1 | 5 | >5 |
| V2 | 755 | 185 |
| SSZ: Scherstandzeiten in min | | |

Die Beispiele 1 bis 3 belegen, daß die Acrylatblockcopolymere durch die Hartblockdomänenbildung eine sehr hohe Scherfestigkeit aufweisen. Das unvemetzte Referenzmuster V1 besitzt dagegen nahezu keine Kohäsion. Referenzbeispiel V2 ist durch die UV-Vernetzung bedeutend scherfester.

## Patentansprüche

1. Verfahren zur Herstellung einer Haftklebemasse auf Basis von (Co-)Polymeren der Acrylsäure und/oder Methacrylsäure und/oder deren Derivaten, die eine zumindest zweiphasige Domänenstruktur sowie einen Ausgasungswert von weniger als 10 µg/g aufweisen, bezogen auf das Gewicht der Haftklebemasse, wenn man die Haftklebemasse eine Stunde bei 100 °C bei Normaldruck ausheizt und anschließend die leichtflüchtigen Bestandteile gaschromatografisch (GC-MS) vermisst [tesa-Methode; DB-5 Säule mit 60 m Länge, 0,25 mm Innendurchmesser, 1 µm Filmdicke; Temperaturprogramm 50 °C (3 min) - 150 °C/min - 260 °C (2 min); Trägergas: Wasserstoff (90 kPa) mit einem Strom von 1 ml/min; Splitverhältnis 1:10; Quantifizierung gegen externe Standards), bei welchem eine durch radikalische Polymerisation mittels des Rapid-Addition-Fragmentation-Transfer- (RAFT-) Verfahrens erhältliche Polyacrylatlösung eingesetzt wird, **gekennzeichnet durch**
eine Aufkonzentration, bei welcher
◆ der Polyacrylatlösung nach erfolgter Polymerisation ein Schleppmittel zugesetzt wird,
◆ die mit dem Schleppmittel versetzte Polyacrylatlösung in einen Extruder geleitet wird, in welchem die Polyacrylatlösung einer Trägerdampfdestillation unterzogen wird,
◆ derart **durch** die Aufkonzentration eine Polyacrylatmasse entsteht, welche aus der Schmelze weiterverarbeitet wird
und die aufkonzentrierte Polyacrylatmasse gegebenenfalls auf ein Trägermaterial aufgetragen wird.

2. Verfahren nach Anspruch 1, **dadurch gekennzeichnet, daß**
im Anschluß an die Aufkonzentration in zumindest einem weiteren Schritt eine Nachreinigung durchgeführt wird, indem die aufkonzentrierte Polyacrylatmasse erneut mit demselben oder einem weiteren Schleppmittel versetzt wird und im Extruder eine weitere Trägerdampfdestillation durchgeführt wird, wobei bevorzugt jeweils höhere Temperaturen und niedrigere Vakuen gewählt werden als in dem vorhergehenden Destillationsschritt.

3. Verfahren nach zumindest einem der Ansprüche 1 oder 2 , **dadurch gekennzeichnet, daß**
zumindest der Extruder im Aufkonzentrationsschritt ein gleich- oder gegenläufiger Doppelschneckenextruder ist.

4. Verfahren nach zumindest einem der Ansprüche 1 bis 3, **dadurch gekennzeichnet, daß**
als Schleppmittel Wasserdampf verwendet wird.

5. Verfahren nach einem der vorangehenden Ansprüche, **dadurch gekennzeichnet, daß** die (Co-)Polymere mindestens teilweise Blockcopolymere des allgemeinen Typs P(A)-P(B)-P(A) sind, wobei
• P(A) einen Homo- oder Copolymerblock aus den Monomeren A repräsentiert, welcher eine Glasübergangstemperatur von -80 °C bis 0 °C besitzt,
• P(B) einen Homo- oder Copolymerblock aus den Monomeren B repräsentiert, welcher eine Glasübergangstemperatur von 20 °C bis 175 °C besitzt,
• und die Homo- oder Copolymerblöcke P(A) und die Homo- oder Copolymerblöcke P(B) ineinander unlöslich sind.

6. Verfahren nach Anspruch 5, **dadurch gekennzeichnet, daß**
die (Co-)Polymere mindestens teilweise Blockcopolymere des allgemeinen Typs P(B)-P(A)-P(B) sind, wobei
• P(A) einen Homo- oder Copolymerblock aus den Monomeren A repräsentiert, welcher eine Glasübergangstemperatur von -80 °C bis 0 °C besitzt,
• P(B) einen Homo- oder Copolymerblock aus den Monomeren B repräsentiert, welcher eine Glasübergangstemperatur von 20 °C bis 175 °C besitzt,
• und die Homo- oder Copolymerblöcke P(A) und die Homo- oder Copolymerblöcke P(B) ineinander unlöslich sind.

7. Verfahren nach einem der Ansprüche 5 oder 6, **dadurch gekennzeichnet, daß** die Monomere A gewählt sind aus der Gruppe der Acrylsäureester CH₂=CHCOOR und/oder Methacrylsäureester CH₂=C(CH₃)COOR, wobei die Gruppen R Alkylreste mit 4 bis 14 Kohlenstoffatomen, bevorzugt solche mit 4 bis 9 Kohlenstoffatomen darstellen.

8. Verfahren nach einem der Ansprüche 5 bis 7, **dadurch gekennzeichnet, daß** zumindest ein Teil der Monomere A eine funktionelle Gruppe R' aufweist, welche zur koordinativen Vernetzung befähigt ist.

9. Verfahren nach einem der Ansprüche 5 bis 7, **dadurch gekennzeichnet, daß** zumindest ein Teil der Monomere A eine funktionelle Gruppe R" aufweist, welche für das Homo- oder Copolymer P(A) und/oder für das gesamte Blockcopolymer eine kohäsionssteigernde Wirkung besitzt.

## Claims

1. Process for preparing a pressure-sensitive adhesive composition based on (co)polymers of acrylic acid and/or methacrylic acid and/or derivatives thereof which have an at least two-phase domain structure and also an outgassing level of less than 10 µg/g, based on the weight of the composition, when the pressure-sensitive adhesive is baked at 100°C under atmospheric pressure for one hour and then the volatile constituents are measured by gas chromatography (GC-MS) [tesa method; DB-5 column with 60 m length, 0.25 mm internal diameter, 1 µm film thickness; temperature programme 50°C (3 min) - 150°C/min - 260°C (2 min); carrier gas: hydrogen (90 kPa) with a flow rate of 1 ml/min; split ratio 1:10; quantification against external standards], using a polyacrylate solution obtainable by free-radical polymerization by means of the Rapid Addition Fragmentation Transfer (RAFT) process, **characterized by**
a concentration process in which
◆ following polymerization, an entrainer is added to the polyacrylate solution,
◆ the polyacrylate solution with the added entrainer is passed into an extruder, in which the polyacrylate solution is subjected to a carrier distillation,
◆ in this way, as a result of the concentration, a polyacrylate composition is produced which is processed further from the melt
and the concentrated polyacrylate composition, where appropriate, is applied to a backing material.

2. Process according to Claim 1, **characterized in that**, following the concentration, a postpurification is carried out in at least one further step by adding the same or another entrainer to the concentrated polyacrylate composition and conducting a further carrier distillation in the extruder, preferably selecting in each case higher temperatures and lower vacuums than in the preceding distillation step.

3. Process according to at least one of Claims 1 and 2, **characterized in that** at least the extruder in the concentration step is a corotating or counterrotating twin screw extruder.

4. Process according to at least one of Claims 1 to 3, **characterized in that** steam is used as entrainer.

5. Process according to any of the preceeding claims, **characterized in that** at least some of the (co)polymers are block copolymers of the general type P(A)-P(B)-P(A), where
• P(A) represents a homopolymer or copolymer block of the monomers A, possessing a glass transition temperature of from -80°C to 0°C,
• P(B) represents a homopolymer or copolymer block of the monomers B, possessing a glass transition temperature of from 20°C to 175°C,
• and the homopolymer or copolymer blocks P(A) and the homopolymer or copolymer blocks P(B) are insoluble in one another.

6. Process according to Claim 5, **characterized in that** at least some of the (co)polymers are block copolymers of the general type P(B)-P(A)-P(B), where
• P(A) represents a homopolymer or copolymer block of the monomers A, possessing a glass transition temperature of from -80°C to 0°C,
• P(B) represents a homopolymer or copolymer block of the monomers B, possessing a glass transition temperature of from 20°C to 175°C,
• and the homopolymer or copolymer blocks P(A) and the homopolymer or copolymer blocks P(B) are insoluble in one another.

7. Process according to either of Claims 5 and 6, **characterized in that** the monomers A are selected from the group of the acrylates CH₂=CHCOOR and/or methacrylates CH₂=C(CH₃)COOR in which the groups R are alkyl radicals having from 4 to 14 carbon atoms, preferably those having from 4 to 9 carbon atoms.

8. Process according to any of Claims 5 to 7, **characterized in that** at least some of the monomers A have a functional group R' which is capable of coordinative crosslinking.

9. Process according to any of Claims 5 to 7, **characterized in that** at least some of the monomers A have a functional group R" which possesses a cohesion-enhancing effect for the homopolymer or copolymer P(A) and/or for the overall block copolymer.

## Revendications

1. Procédé pour la préparation d'une masse autoadhésive à base de (co)polymères de l'acide acrylique et/ou de l'acide méthacrylique et/ou de leurs dérivés, qui présentent une structure de domaines au moins à deux phases ainsi qu'une valeur de dégazage inférieure à 10 µg/g, par rapport au poids de la masse autoadhésive, lorsqu'on chauffe la masse autoadhésive pendant une heure à 100°C à pression normale et on mesure ensuite les constituants volatils par chromatographie en phase gazeuse (GC-MS) [procédé tesa ; colonne DB-5 d'une longueur de 60 m, diamètre interne 0,25 mm, épaisseur de film 1 µm ; programme de température 50°C (3 min) - 150°C/min - 260°C (2 min) ; gaz support : hydrogène (90 kPa) à un flux de 1 ml/min ; rapport de division 1:10 ; quantification par rapport à des standards externes), dans lequel on utilise une solution de polyacrylate pouvant être obtenue par polymérisation radicalaire au moyen du procédé par addition-fragmentation-transfert rapide (Rapid-Addition-Fragmentation-Transfer - RAFT), **caractérisé par** un processus de concentration, dans lequel
- la solution de polyacrylate est additionnée, après la polymérisation, d'un agent d'entraînement,
- la solution de polyacrylate additionnée de l'agent d'entraînement est introduite dans une extrudeuse dans laquelle la solution de polyacrylate est soumise à une distillation à la vapeur,
- de manière telle qu'il se forme par le processus de concentration une masse de polyacrylate qui est transformée davantage à partir de la masse fondue,
et la masse de polyacrylate concentrée est le cas échéant appliquée sur un matériau support.

2. Procédé selon la revendication 1, **caractérisé en ce qu'**on réalise après le processus de concentration, en au moins une autre étape, une postpurification, **en ce que** la masse de polyacrylate concentrée est à nouveau additionnée du même agent d'entraînement ou d'un autre agent d'entraînement et on réalise dans l'extrudeuse une autre distillation à la vapeur, en choisissant de préférence à chaque fois des températures supérieures et des vides plus bas que dans l'étape de distillation précédente.

3. Procédé selon au moins l'une quelconque des revendications 1 ou 2, **caractérisé en ce que** l'extrudeuse dans l'étape de concentration est une extrudeuse à double vis sans fin tournant dans le même sens ou dans un sens opposé l'un à l'autre.

4. Procédé selon au moins l'une quelconque des revendications 1 à 3, **caractérisé en ce qu'**on utilise de la vapeur d'eau comme agent d'entraînement.

5. Procédé selon l'une quelconque des revendications précédentes, **caractérisé en ce que** les (co)polymères sont, au moins partiellement, des copolymères à blocs de type général P(A)-P(B)-P(A), où
- P(A) représente un bloc homopolymère ou copolymère des monomères A, qui présente une température de transition vitreuse de -80°C à 0°C,
- P(B) représente un bloc homopolymère ou copolymère des monomères B, qui présente une température de transition vitreuse de 20°C à 175°C,
- et les blocs homopolymères ou copolymères P(A) et les blocs homopolymères ou copolymères P(B) sont insolubles l'un dans l'autre.

6. Procédé selon la revendication 5, **caractérisé en ce que** les (co)polymères sont, au moins partiellement, des copolymères à blocs de type général P(B)-P(A)-P(B), où
- P(A) représente un bloc homopolymère ou copolymère des monomères A, qui présente une température de transition vitreuse de -80°C à 0°C,
- P(B) représente un bloc homopolymère ou copolymère des monomères B, qui présente une température de transition vitreuse de 20°C à 175°C,
- et les blocs homopolymères ou copolymères P(A) et les blocs homopolymères ou copolymères P(B) sont insolubles l'un dans l'autre.

7. Procédé selon l'une quelconque des revendications 5 ou 6, **caractérisé en ce que** les monomères A sont choisis dans le groupe des esters de l'acide acrylique CH₂=CHCOOR et/ou des esters de l'acide méthacrylique CH₂=C(CH₃)COOR, les groupes R représentant des radicaux alkyle comprenant 4 à 14 atomes de carbone, de préférence ceux comprenant 4 à 9 atomes de carbone.

8. Procédé selon l'une quelconque des revendications 5 à 7, **caractérisé en ce qu'**au moins une partie des monomères A présente un groupe fonctionnel R', qui est apte à une réticulation par coordination.

9. Procédé selon l'une quelconque des revendications 5 à 7, **caractérisé en ce qu'**au moins une partie des monomères A présente un groupe fonctionnel R" qui présente un effet d'augmentation de la cohésion pour l'homopolymère ou le copolymère P(A) et/ou pour l'ensemble du copolymère à blocs.
